# EUROPÄISCHE PATENTANMELDUNG

(11) **EP 3 698 956 A1**
(43) Veröffentlichungstag der Anmeldung: **26.08.2020**
(21) Anmeldenummer: 19158560.3
(22) Anmeldetag: 21.02.2019
(51) Int. Cl.: B29C 71/00, B29C 71/02, B29C 64/35

(54) **VERFAHREN ZUR OBERFLÄCHENBEARBEITUNG VON POLYMEREN DREIDIMENSIONALEN OBJEKTEN**

(71) Anmelder: Evonik Operations GmbH, 45128 Essen (DE)
(72) Erfinder: GREBE, Maik, 44805 Bochum (DE); DIEKMANN, Wolfgang, 45731 Waltrop (DE); DOMINGUES BAPTISTA, Andreas, 40468 Düsseldorf (DE)
(74) Vertreter: Evonik Patent Association

(57) **Zusammenfassung**

Die Erfindung betrifft Verfahren zur Oberflächenbearbeitung von dreidimensionalen Objekten, welche in Additive Manufacturing-Verfahren aus mindestens einem Polymer hergestellt wurden. Das Verfahren umfasst die folgenden Schritte:
a) Eintauchen des dreidimensionalen Objekts in ein Stoffgemisch A,
b) Verweilen des dreidimensionalen Objekts in dem Stoffgemisch A,
c) Herausnahme des dreidimensionalen Objekts aus dem Stoffgemisch A,
d) Eintauchen des dreidimensionalen Objekts in ein Stoffgemisch B,
e) Verweilen des dreidimensionalen Objekts in dem Stoffgemisch B und
f) Herausnahme des dreidimensionalen Objekts aus dem Stoffgemisch B.

Das Stoffgemisch A weist eine Temperatur (Prozesstemperatur A) auf, die über dem Schmelzpunkt des Polymers liegt, und das Stoffgemisch B weist eine Temperatur (Prozesstemperatur B) auf, die unter dem Schmelzpunkt des Polymers liegt.

## Beschreibung

Die vorliegende Erfindung betrifft die Oberflächenbearbeitung von dreidimensionalen Objekten, welche in Additive Manufacturing-Verfahren aus mindestens einem Polymer hergestellt wurden. Weiterhin betrifft die Erfindung eine Vorrichtung zur Oberflächenbehandlung sowie Formkörper, welche nach dem Verfahren behandelt wurden.

Die zügige Bereitstellung von Prototypen oder Kleinserien ist eine in der jüngsten Zeit häufig gestellte Aufgabe. Verfahren, die es ermöglichen, dreidimensionale Objekte schnell herzustellen, werden Rapid Prototyping, Rapid Manufacturing, Additive Fabrication-Verfahren oder 3D Printing genannt. In der ISO/ASTM 52900 werden diese Verfahren unter Additive Manufacturing zusammengefasst.

Verfahren bei denen schichtweise ein Strang abgelegt wird, um ein dreidimensionales Objekt herzustellen, werden unter dem Begriff Material Extrusion zusammengefasst. Ein Beispiel für Material Extrusion ist das Fused Deposition Modelling (FDM). In US 5121329 ist dieses Verfahren ausführlich beschrieben.

Besonders geeignet sind Verfahren, bei denen schichtweise durch selektives Aufschmelzen und/oder Verfestigen von pulverförmigen Werkstoffen die gewünschten Strukturen hergestellt werden. Die nach diesem Prinzip arbeitenden Verfahren werden unter dem Oberbegriff Powder Bed Fusion zusammengefasst. Die Powder Bed Fusion-Technologie umfasst unter anderem das Selective Heat Sintering (SHS), das selektive Lasersintern (SLS), das Selective Absorbing Sintering (SAS) und das Selective Inhibition Sintering (SIS). Das Laser-Sintern wird ausführlich in den Schriften US 6136948 und WO 9606881 beschrieben. Weitere Beispiele für Powder Bed Fusion-Verfahren sind in den Patentschriften US 6531086 und EP 1740367 (US 2007/238056) erwähnt. In der DE 19747309 (US 6245281) ist ein Pulver offenbart, welches gut für eine Anwendung im Powder Bed Fusion-Verfahren geeignet ist.

Ein Nachteil der oben genannten Verfahren ist, dass die mit diesen Verfahren hergestellten Objekte keine einheitliche, glatte Oberfläche vorweisen. In vielen Anwendungsfällen ist eine glatte Oberfläche der Objekte aus ästhetischen oder technischen Gründen wünschenswert oder gar erforderlich, so dass Objekte, die mittels der oben genannten Verfahren hergestellt werden, nicht eingesetzt werden können.

Es gibt verschiedene Oberflächenbearbeitungsverfahren, um die Oberflächen glatter (d.h. mit geringerer Rauheit) zu gestalten. Ein gängiges, einfaches mechanisches Verfahren zur Oberflächenbearbeitung ist das Strahlen mit Strahlgut wie zum Beispiel Sand oder Glaskugeln. Die Oberflächen werden mit diesem Verfahren aber nur unzureichend geglättet. Ein weiteres mechanisches Verfahren ist das Gleitschleifen oder auch Trowalisieren. Mit diesem Verfahren können glatte Oberflächen erzielt werden, aber innen liegende Ecken werden schlecht und exponiert liegende Ecken werden übermäßig bearbeitet. Zudem besteht bei diesem Verfahren die Gefahr, dass filigrane Bauteile beschädigt werden.

In US 2005/017383 werden mittels eines dampfförmigen Lösemittels die Oberflächen eines dreidimensionalen Objektes geglättet. Hier wird zwar eine Glättung an allen Stellen eines dreidimensionalen Objekts erzielt, aber es ist ein Lösemittel erforderlich, welches das Polymermaterial löst. Lösemittel, welche die gängigsten Polymere lösen, sind aber ätzend oder zumindest gesundheits- und umweltgefährdend. Bei organischen Dämpfen besteht zudem eine hohe Explosionsgefahr.

Aufgabe der vorliegenden Erfindung war es daher, ein einfaches und kostengünstiges Oberflächenbearbeitungsverfahren bereit zu stellen, welches die Oberflächen eines dreidimensionalen Objektes glättet bzw. die Rauigkeit der Oberfläche reduziert. Die geglättete Oberfläche sollte möglichst gleichmäßig sein. Das Verfahren sollte dabei ohne giftige oder gesundheitsgefährdende Stoffe auskommen. Zudem sollte die Reißdehnung der Objekte erhöht werden.

Überraschend wurde die Aufgabe durch ein Verfahren gelöst, bei dem die Oberfläche eines dreidimensionalen Objekts, welches in Additive Manufacturing-Verfahren aus mindestens einem Polymer hergestellt wurde, bearbeitet wird. Das erfindungsgemäße Verfahren umfasst die Schritte:
a) Eintauchen des dreidimensionalen Objekts in ein Stoffgemisch A,
b) Verweilen des dreidimensionalen Objekts in dem Stoffgemisch A,
c) Herausnahme des dreidimensionalen Objekts aus dem Stoffgemisch A,
d) Eintauchen des dreidimensionalen Objekts in ein Stoffgemisch B,
e) Verweilen des dreidimensionalen Objekts in dem Stoffgemisch B und
f) Herausnahme des dreidimensionalen Objekts aus dem Stoffgemisch B,

Das Stoffgemisch A weist eine Temperatur auf, die über dem Schmelzpunkt des Polymers liegt. Diese Temperatur wird Prozesstemperatur A genannt. Das Stoffgemisch B weist eine Temperatur auf, die unter dem Schmelzpunkt des Polymers liegt. Dies entspricht der Prozesstemperatur B. Sofern mehrere Polymere bei der Herstellung eines dreidimensionalen Objekts eingesetzt wurden, gelten die zuvor und auch die nachfolgenden Bedingungen für das Gemisch an Polymeren, sofern nicht etwas anderes angegeben ist.

Das erfindungsgemäße Verfahren ermöglicht es, Formkörper mit geringerer Rauigkeit bzw. erhöhter und gleichmäßiger Oberflächenglätte bereitzustellen. Zudem zeigen die Formkörper eine erhöhte Reißdehnung auf.

Das Objekt aus dem Additive Manufacturing-Verfahren wird Norm-gemäß schichtweise hergestellt.

In dieser Anmeldung umfasst das Stoffgemisch auch den Sonderfall, dass das Stoffgemisch A bzw. B aus einem einzigen Stoff besteht.

In einer bevorzugten Ausführung des Verfahrens wird das dreidimensionale Objekt vor dem Schritt a) auf eine Temperatur von unter 0 °C temperiert. Besonders bevorzugt ist eine Temperierung von unter -20 °C, besonders bevorzugt von unter -40 °C. Die Kühlbedingungen sind so zu wählen, dass sichergestellt ist, dass das komplette dreidimensionale Objekt die gewünschte Temperatur vorweist.

Bevorzugte Stoffe des Stoffgemischs A weisen eine molekulare Masse von mindestens 150 g/mol auf. Beispiele für derartige Verbindungen sind ausgewählt aus Alkanen, Alkoholen einschließlich mehrwertiger Alkohole wie Glykole, Siloxanen und Alkenen.

Das Stoffgemisch A enthält vorzugsweise mindestens 50 Massen-%, bezogen auf die Gesamtmasse an Stoffgemisch A, eines Stoffes, der bei der Prozesstemperatur A flüssig ist. Bevorzugt sind mindestens 70 Massen-% an flüssigen Stoffen enthalten, besonders bevorzugt 90 Massen-%. Die restlichen Anteile des Stoffgemisches liegen bei der Prozesstemperatur A in fester Form vor.

Die bei der Prozesstemperatur A flüssigen Stoffe des Stoffgemisches A können untereinander mischbar (Bildung einer einzigen homogenen Phase) oder auch untereinander nicht mischbar (Bildung mehrerer Phasen) sein.

Bevorzugt ist der mindestens eine flüssige Stoff des Stoffgemisches A nicht mischbar mit ggf. vorhandenen weiteren flüssigen Komponenten des Stoffgemisches A. Dabei soll der eine flüssige Stoff eine gute Verträglichkeit oder Kompatibilität mit dem Polymermaterial des dreidimensionalen Objekts aufweisen, d.h. die Differenz der Oberflächenspannung zwischen Polymer und flüssigem Stoff beträgt maximal 10 mN/m, vorzugsweise maximal 5 mN/m. Ganz besonders bevorzugt entspricht der mindestens eine flüssige Stoff dem Polymer oder Polymergemisch des dreidimensionalen Objekts.

Die weiteren flüssigen Komponenten sind vorzugsweise derart ausgewählt, dass sie den polymeren Werkstoff des dreidimensionalen Objekts nach CRC Handbook of Chemistry and Physics, 94th Edition, nicht oder schlecht lösen (d.h. die Löslichkeit des Polymers ist bei 23 °C kleiner 10 g/L).

Als Maß für die Verträglichkeit und/oder Kompatibilität zwischen flüssigem Stoff und dem Polymer des dreidimensionalen Objekts kann die Differenz der jeweiligen Oberflächenspannung herangezogen werden (gemessen nach Pendant Drop Methode, ermittelt mittels Oberflächenspannungsmessgerät OCA 20 der Firma Data Physics bei der Prozesstemperatur A des erfindungsgemäßen Verfahrens).

Der mindestens eine flüssige Stoff kann Additive enthalten, die an der Oberfläche des dreidimensionalen Objekts einen oder mehrere zusätzliche Effekte hervorrufen können, wie zum Beispiel Farbe/ Farbeffekte, elektrische Leitfähigkeit, Härte, Flammschutz, Chemikalien-/ Witterungsbeständigkeit, Reibungseigenschaften oder Haptik.

Die Verfahrensschritte a bis f können mehrfach durchgeführt werden. Dadurch können mehrere Schichten flüssigen Stoffs des Stoffgemisches aufgetragen werden. Darüber hinaus kann das Objekt in verschiedene Stoffgemische A eingetaucht werden, so dass Schichten mit jeweils unterschiedlichen Eigenschaften auf dem dreidimensionalen Objekt aufgetragen werden können.

Die Temperatur des Stoffgemisches A wird in Abhängigkeit vom Polymer des dreidimensionalen Objekts gewählt. Für Materialien mit mehreren Schmelzpunkten ist der Hauptschmelzpunkt für die Temperatur des Stoffgemisches A maßgebend.

Bei dem erfindungsgemäßen Verfahren wird für das Stoffgemisches A eine Temperatur gewählt, welche über dem Schmelzpunkt des Polymers liegt. Bevorzugt liegt die Temperatur des Stoffgemisches A mindestens 10 °C über dem Schmelzpunkt des Polymers, besonders bevorzugt mindestens 20 °C und ganz besonders bevorzugt mindestens 30 °C über dem Schmelzpunkt des Polymers.

Der Siedepunkt des Stoffgemisches A sollte dabei vorzugsweise mindestens 20 °C über dem Schmelzpunkt des Polymers liegen, bevorzugt mindestens 30 °C und ganz besonders bevorzugt mindestens 40 °C.

Bevorzugt wird ein Stoffgemische A gewählt, dessen Dichte nicht mehr als 25 % von der Dichte des Polymers des dreidimensionalen Objekts abweicht (Dichte jeweils bei 23 °C). Besonders bevorzugt wird ein Stoffgemisch A gewählt, dessen Dichte nicht mehr als 15 % und ganz besonders bevorzugt nicht mehr als 5 % abweicht.

Bei dem erfindungsgemäßen Verfahren wird das dreidimensionale Objekt vorzugsweise für maximal 60 s in das Stoffgemisch A eingetaucht, bevorzugt für maximal 40 s, besonders bevorzugt für maximal 20 s und ganz besonders bevorzugt für maximal 10 s. Sofern die Schritte mehrfach durchgeführt werden sollte, beziehen sich die zeitlichen Angaben jeweils auf die einzelnen, zu wiederholenden Schritte.

Bei dem erfindungsgemäßen Verfahren wird eine Temperatur für das Stoffgemisch B gewählt, welche unter dem Schmelzpunkt des dreidimensionalen Objekts liegt. Bevorzugt liegt die Temperatur des Stoffgemisches B mindestens 20 °C unter dem Schmelzpunkt dreidimensionalen Objekts, besonders bevorzugt mindestens 40 °C und ganz besonders bevorzugt mindestens 80 °C unter dem Schmelzpunkt dreidimensionalen Objekts.

Es ist bevorzugt, dass das Stoffgemisch B bei der Prozesstemperatur B flüssig ist.

Bevorzugt wird ein Stoffgemisch B gewählt, bei dem die einzelnen Komponenten des Gemischs den polymeren Werkstoff des dreidimensionalen Objekts nach CRC Handbook of Chemistry and Physics, 94th Edition, nicht oder schlecht löst (d.h. die Löslichkeit des Polymers ist bei 23 °C kleiner 10 g/L). Die Komponenten sollten gegenüber dem Polymer chemisch inert sein. Geeignete Stoffgemische B sind beispielsweise Öle oder Wasser, wobei Wasser bevorzugt ist.

Alle angegeben Schmelz-/ Siedetemperaturen beziehen sich auf Werte bei Normaldruck, welche mittels DSC (DIN 53765, DSC 7 von Perkin Elmer Heiz-/Kühlrate 20K/min) gemessen worden sind.

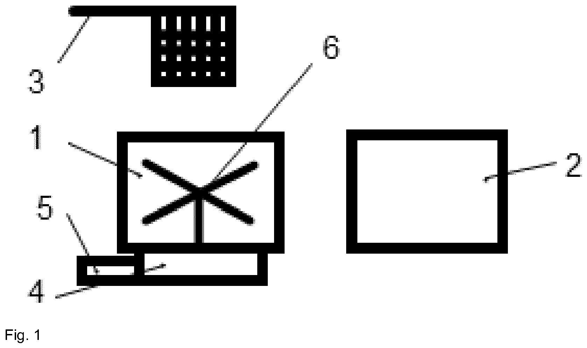

Ein weiterer Gegenstand der Erfindung ist eine Vorrichtung, bei dem die Oberfläche eines dreidimensionalen Objekts durch das erfindungsgemäße Verfahren geglättet wird. die Vorrichtung ist in Fig. 1 dargestellt. Die Vorrichtung umfasst mindestens einen Behälter A (1), welcher für die Aufnahme des Stoffgemischs A geeignet ist, und einen Behälter B (2), der für die Aufnahme des Stoffgemischs B geeignet ist. Ein weiterer Bestandteil der Vorrichtung ist ein Heizkörper (4), welcher das Stoffgemisch in Behälter A (1) erwärmen kann. Bevorzugt verfügt die Vorrichtung über eine Regelung (5), um die Temperatur des Behälters A (1) einstellen zu können. Der Behälter A (1) verfügt vorzugsweise über eine Rührvorrichtung (6) zur Einbringung von Scherung in ein Stoffgemisch. Optionaler Bestandteil der erfindungsgemäßen Vorrichtung ist ein gitterförmiges Behältnis (3), mit dem die dreidimensionalen Objekte in die jeweiligen Flüssigkeiten in den Behältern A (1) und Behälter B (2) eingetaucht und wieder herausgenommen werden können.

Die Vorrichtung kann auch in einer kontinuierlichen Variante ausgeführt werden. In dieser Variante werden die dreidimensionalen Objekte mittels eines Transportbandes in Behälter A und von dort in Behälter B verbracht.

Formkörper, die aus erfindungsgemäßen Verfahren erhalten werden, sind ein weiterer Gegenstand der Erfindung.

### Beispiele

### Beispiel 1: SLS-Bauteil PA12 sandgestrahlt (nicht erfindungsgemäß)

Ein mittels SLS hergestellter Prüfkörper (gemäß DIN EN ISO 527-1 und UL94) aus Polyamid 12 (EOSINT PA2200) wird mittels Glaskugelstrahlen von Pulverresten befreit.

### Beispiel 2: SLS-Bauteil PEA sandgestrahlt (nicht erfindungsgemäß)

Ein mittels SLS hergestellter Prüfkörper (gemäß DIN EN ISO 527-1 und UL94) aus Polyesteramid PEA (EOSINT Primepart ST) wird mittels Glaskugelstrahlen von Pulverresten befreit.

### Beispiel 3: SLS-Bauteil PA613 sandgestrahlt (nicht erfindungsgemäß)

Ein mittels SLS hergestellter Prüfkörper (gemäß DIN EN ISO 527-1 und UL94) aus PA613-Fällpulver wird mittels Glaskugelstrahlen von Pulverresten befreit.

### Beispiel 4: FDM-Bauteil unbehandelt (nicht erfindungsgemäß)

Ein mittels FDM hergestellter Prüfkörper (gemäß DIN EN ISO 527-1 und UL94) aus Acrylnitril-Butadien-Styrol ABS wird von den Stützgeometrien befreit und abgewaschen.

### Beispiel 5: FDM-Bauteil unbehandelt (nicht erfindungsgemäß)

Ein mittels FDM hergestellter Prüfkörper (gemäß DIN EN ISO 527-1 und UL94) aus Polylactid PLA wird von den Stützgeometrien befreit und abgewaschen.

### Beispiel 6: SLS-Bauteil PA12 Oberflächenbehandelt bei 200 °C (erfindungsgemäß)

Ein Prüfkörper hergestellt und nachbearbeitet wie in Beispiel 1 wird zusätzlich in einem Ölbad (MARLOTHERM N) bei 205 °C für 20s eingetaucht. Danach wird der Prüfkörper herausgenommen und in einem Wasserbad (25 °C) für 10s eingetaucht.

### Beispiel 7: SLS-Bauteil Oberflächenbehandelt bei 170 °C (erfindungsgemäß)

Ein Prüfkörper hergestellt und nachbearbeitet wie in Beispiel 2 wird zusätzlich in einem Glycerin Bad bei 170 °C für 20s eingetaucht. Danach wird der Prüfkörper herausgenommen und in einem Wasserbad (25 °C) für 10s eingetaucht.

### Beispiel 8: SLS-Bauteil Oberflächenbehandelt bei 230 °C (erfindungsgemäß)

Ein Prüfkörper hergestellt und nachbearbeitet wie in Beispiel 3 wird zusätzlich in einem Ölbad (MARLOTHERM N) bei 240 °C für 10s eingetaucht. Danach wird der Prüfkörper herausgenommen und in einem Wasserbad (25 °C) für 10s eingetaucht.

### Beispiel 9: FDM-Bauteil Oberflächenbehandelt bei 120 °C (erfindungsgemäß)

Ein Prüfkörper hergestellt und nachbearbeitet wie in Beispiel 4 wird zusätzlich in einem Bad aus 1,2-Propandiol bei 150 °C für 20s eingetaucht. Danach wird der Prüfkörper herausgenommen und in einem Wasserbad (25 °C) für 10s eingetaucht.

### Beispiel 10: FDM-Bauteil Oberflächenbehandelt bei 160 °C (erfindungsgemäß)

Ein Prüfkörper hergestellt und nachbearbeitet wie in Beispiel 5 wird zusätzlich in einem Ölbad Ethylenglycol bei 180 °C für 20s eingetaucht. Danach wird der Prüfkörper herausgenommen und in einem Wasserbad (25 °C) für 10s eingetaucht.

### Beispiel 11: SLS-Bauteil PA12 Oberflächenbehandelt bei 200 °C (erfindungsgemäß)

Ein Prüfkörper hergestellt und nachbearbeitet wie in Beispiel 1 wird in einer Kühlkammer 4h auf -30 °C temperiert. Danach wird der Prüfkörper zusätzlich in ein Stoffgemisch bei 200 °C für 20s eingetaucht. Das Stoffgemisch besteht zu 80 Masseprozent aus einem Wärmeträgeröl (MARLOTHERM N) und zu 20 % aus einem Polyamid 12 (VESTAMID L1723 blk sw). Das Stoffgemisch wird mittels eines Rührers ständig durchmischt. Danach wird der Prüfkörper herausgenommen und in einem Wasserbad (25 °C) für 10s eingetaucht.

### Beispiel 12: SLS-Bauteil PA12 Oberflächenbehandelt bei 190 °C (erfindungsgemäß)

Ein Prüfkörper/UL-Prüfkörper hergestellt und nachbearbeitet wie in Beispiel 1 wird in einer Kühlkammer 16h auf -60 °C temperiert. Danach wird der Zugprüfkörper/UL Prüfkörper zusätzlich in ein Stoffgemisch bei 190 °C für 40s eingetaucht. Das Stoffgemisch besteht zu 80 Masseprozent aus einem Wärmeträgeröl (MARLOTHERM N) und zu 20% aus einem Polyamid 12 (VESTAMID X7166 nc). Das Stoffgemisch wird mittels eines Rührers ständig durchmischt. Danach wird der Prüfkörper herausgenommen und in einem Wasserbad (25 °C) für 10s eingetaucht.

**Tabelle1: Ergebnisse der Prüfkörper-Prüfungen**

| Beispiel | E-Modul [MPa] | Zugfestigkeit [MPa] | Reißdehnung [%] | Rauigkeit Sa [µm] | Bemerkung |
|---|---|---|---|---|---|
| 1 | 1750 | 49 | 18 | 42 | Bauteil weiß, UL94 3,2mm HB |
| 2 | 183 | 9 | 216 | 63 | |
| 3 | 2242 | 58 | 26 | 44 | |
| 4 | 2136 | 56 | 3 | 382 | |
| 5 | 3127 | 51 | 5 | 128 | |
| 6* | 1714 | 48 | 57 | 22 | |
| 7* | 184 | 10 | 384 | 28 | |
| 8* | 2231 | 59 | 64 | 24 | |
| 9* | 2120 | 55 | 5 | 298 | |
| 10* | 3133 | 52 | 5 | 92 | |
| 11* | 1713 | 48 | 42 | 16 | Bauteil schwarz |
| 12* | 1694 | 47 | 33 | 15 | UL94 3,2mm V2 |

| | | | | | |
|---|---|---|---|---|---|
| * erfindungsgemäß | | | | | |

Die Prüfkörper wurden nach DIN EN ISO 527-1 und UL94 geprüft. Als Maß für die Rauigkeit wurde die mittlere arithmetische Höhe (Sa) herangezogen. Die Sa wurde mittels eines Keyence Mikroskops VHX6000 an der Unterseite der Prüfkörper ermittelt. Die Ergebnisse der Beispielsversuche sind der Tabelle 1 zu entnehmen. Es ist zu erkennen, dass die Rauigkeit der dreidimensionalen Objekte durch das erfindungsgemäße Verfahren deutlich reduziert werden konnte. Die Reißdehnung der dreidimensionalen Objekte in den erfindungsgemäßen Beispielen wurde deutlich erhöht, während die anderen mechanischen Kennwerte auf gleichem Niveau gehalten werden konnten. Im Beispiel 11 wurde zudem eine schwarze Oberfläche erzielt. In Beispiel 12 wurde eine flammhemmende Wirkung erzielt.

Mit dem erfindungsgemäßen Verfahren konnte somit eine geringere Oberflächenrauigkeit der dreidimensionalen Objekte erzielt werden. Darüber hinaus konnten zusätzliche Effekte wie Farbe oder Flammschutz durch das erfindungsgemäße Verfahren erzielt werden.

## Patentansprüche

1. Verfahren zur Oberflächenbearbeitung von dreidimensionalen Objekten, welche in Additive Manufacturing-Verfahren aus mindestens einem Polymer hergestellt wurden, umfassend die folgenden Schritte:
a) Eintauchen des dreidimensionalen Objekts in ein Stoffgemisch A,
b) Verweilen des dreidimensionalen Objekts in dem Stoffgemisch A,
c) Herausnahme des dreidimensionalen Objekts aus dem Stoffgemisch A,
d) Eintauchen des dreidimensionalen Objekts in ein Stoffgemisch B,
e) Verweilen des dreidimensionalen Objekts in dem Stoffgemisch B und
f) Herausnahme des dreidimensionalen Objekts aus dem Stoffgemisch B,
**dadurch gekennzeichnet, dass** das Stoffgemisch A eine Temperatur (Prozesstemperatur A) aufweist, die über dem Schmelzpunkt des Polymers liegt, und dass das Stoffgemisch B eine Temperatur (Prozesstemperatur B) aufweist, die unter dem Schmelzpunkt des Polymers liegt.

2. Verfahren nach Anspruch 1, **dadurch gekennzeichnet, dass** das Stoffgemisch A mindestens 50 Massen-%, bezogen auf die Gesamtmasse an Stoffgemisch A, mindestens eines Stoffes enthält, der bei Prozesstemperatur A flüssig sind.

3. Verfahren nach einem der vorherigen Ansprüche, **dadurch gekennzeichnet, dass** die Dichte des Stoffgemisches A nicht mehr als 25 % von der Dichte des Polymers des dreidimensionalen Objekts abweicht.

4. Verfahren nach Anspruch 2, **dadurch gekennzeichnet, dass** der mindestens eine flüssige Stoff mit den weiteren flüssigen Komponenten des Stoffgemisches nicht mischbar ist, wobei die Differenz der Oberflächenspannung zwischen Polymer und flüssigem Stoff maximal 10 mN/m beträgt.

5. Verfahren nach Anspruch 2, **dadurch gekennzeichnet, dass** der mindestens eine flüssige Stoff mindestens einem Polymer des dreidimensionalen Objekts entspricht.

6. Verfahren nach einem der vorherigen Ansprüche, **dadurch gekennzeichnet, dass** die Schritte a bis f mehrfach durchgeführt werden.

7. Verfahren nach einem der vorherigen Ansprüche **dadurch gekennzeichnet, dass** die dreidimensionalen Objekte vor dem Schritt a auf eine Temperatur von unter 0 °C temperiert werden.

8. Verfahren nach einem der vorherigen Ansprüche **dadurch gekennzeichnet, dass** die dreidimensionalen Objekte für maximal 60s in das Stoffgemisch A eingetaucht werden.

9. Verfahren nach einem der vorherigen Ansprüche **dadurch gekennzeichnet, dass** das Stoffgemisch B eine Temperatur aufweist, die mindestens 20 °C unterhalb des Schmelzpunkts des Polymers liegt.

10. Verfahren nach einem der vorherigen Ansprüche **dadurch gekennzeichnet, dass** das Stoffgemisch B bei der Prozesstemperatur B flüssig ist.

11. Verfahren nach einem der vorherigen Ansprüche **dadurch gekennzeichnet, dass** das Stoffgemisch B Stoffe enthält, in dem das Polymer eine Löslichkeit von weniger als 10 g/L aufweist.

12. Vorrichtung zur Oberflächenbearbeitung von dreidimensionalen Objekten, welche in Additive Manufacturing-Verfahren aus mindestens einem Polymer hergestellt wurden, umfassend ein Behälter A (1) mit einem Heizkörper und einem Behälter B (2).

13. Vorrichtung nach Anspruch 12 mit einer Rührvorrichtung (6) in Behälter A.

14. Formkörper, die mittels eines Verfahrens nach einem der Ansprüche 1 bis 11 behandelt wurden.
